# EUROPÄISCHE PATENTANMELDUNG

(11) **EP 3 021 301 A1**
(43) Veröffentlichungstag der Anmeldung: **18.05.2016**
(21) Anmeldenummer: 15188685.0
(22) Anmeldetag: 07.10.2015
(51) Int. Cl.: G08C 17/02

(54) **WERKZEUG UND VERFAHREN ZUR KONFIGURATION EINES WERKZEUGS MIT EINER EXTERNEN STEUERVORRICHTUNG**

(30) Priorität: 12.11.2014 DE 102014223030
(71) Anmelder: ROBERT BOSCH GMBH, 70442 Stuttgart (DE)
(72) Erfinder: Merz, Martin, 74427 Fichtenberg (DE)
(74) Vertreter: Thürer, Andreas

(57) **Zusammenfassung**

Es ist ein Werkzeug (20) und ein Verfahren zur Konfiguration eines Werkzeugs (20) mit einer externen Steuervorrichtung (10) bereitgestellt, wobei das Werkzeug (20) insbesondere im Rahmen eines industriellen Automatisierungsprozesses verwendbar ist. Das Werkzeug (20) umfasst, ein Werkzeugelement (21) zur Bearbeitung eines Werkstücks (60), und eine Übermittlungseinrichtung (22; 25; 26; 27) zur Übermittlung von Verbindungsparametern (30) an eine Leseeinrichtung (11; 11A; 11B), um eine Kommunikationsverbindung (40) mit einer Steuervorrichtung (10) zur Konfiguration des Werkzeugs (20) mit der externen Steuervorrichtung (10) aufzubauen.

## Beschreibung

Die vorliegende Erfindung bezieht sich auf ein Werkzeug und ein Verfahren zur Konfiguration eines Werkzeugs mit einer externen Steuervorrichtung, wobei das Werkzeug insbesondere im Rahmen eines industriellen Automatisierungsprozesses verwendbar ist, der beispielsweise mit einer Automatisierungsanlage ausgeführt werden kann, welche die Steuervorrichtung aufweist.

In größeren Anlagen, wie beispielsweise einer Automatisierungsanlage, kann ein Werkzeug wie beispielsweise ein Schraubwerkzeug mit einem Schrauber, ein Nietwerkzeug mit einem Nietsetzelement, ein Schweißwerkzeug mit einer Schweißzange, usw. Verwendung finden. Hierbei ist es gegebenenfalls erforderlich, dass das Werkzeug mit einer Steuervorrichtung der Automatisierungsanlage kommuniziert, um Daten auszutauschen. Die Daten können beispielsweise Konfigurationsdaten sein, welche von der Steuervorrichtung an das Werkzeug zu übermitteln sind, damit das Werkzeug seine Bearbeitung eines Werkstücks mit von der Steuervorrichtung vorgegebenen Daten durchführt. Damit kann erreicht werden, dass das Werkzeug immer auf dem aktuellsten Entwicklungsstand ist.

Um eine solche Kommunikation zwischen Werkzeug und Steuervorrichtung zu ermöglichen, ist es erforderlich, dass eine geeignete Kommunikationsverbindung zwischen Werkzeug und Steuervorrichtung vorhanden ist, bei welcher sich Werkzeug und/oder Steuervorrichtung adressieren können.

Problematisch ist jedoch, dass in einer größeren Automatisierungsanlage immer wieder neue Werkzeuge zum Einsatz kommen sollen oder die Werkzeuge zwischendurch ausgeschaltet und danach neu gestartet werden. Zudem sind immer wieder Aktualisierungen der Software oder von Parametern des Werkzeugs vorzunehmen. In jedem Fall müssen die Verbindungsparameter bei der Steuervorrichtung zu verschiedenen Zeiten neu angegeben werden.

Gemäß den derzeit verfügbaren Möglichkeiten hierfür, ist die Netzwerkadresse des Werkzeugs manuell in eine Parametrierungssoftware oder Browser der Steuervorrichtung einzugeben. Eine solche Eingabe ist für den Benutzer des Werkzeugs sehr aufwändig und außerdem fehleranfällig. Dadurch verzögert sich der Arbeitsablauf, wodurch sich die Bearbeitung mit dem Werkzeug verzögert und dadurch verteuert. Aus diesem Grund wird gegebenenfalls eine Kommunikationsverbindung zur Neu- oder Umkonfiguration des Werkzeugs vom Benutzer gar nicht aufgebaut, auch wenn sie erforderlich wäre.

Daher ist es Aufgabe der vorliegenden Erfindung, ein Werkzeug und ein Verfahren zur Konfiguration eines Werkzeugs mit einer externen Steuervorrichtung bereitzustellen, mit welchen die zuvor genannten Probleme gelöst werden können. Insbesondere sollen ein Werkzeug und ein Verfahren zur Konfiguration eines Werkzeugs mit einer externen Steuervorrichtung bereitgestellt werden, bei welchen das Werkzeug schnell und sicher konfiguriert werden kann.

Diese Aufgabe wird durch ein Werkzeug nach Patentanspruch 1 gelöst. Das Werkzeug hat ein Werkzeugelement zur Bearbeitung eines Werkstücks, und eine Übermittlungseinrichtung zur Übermittlung von Verbindungsparametern an eine Leseeinrichtung, um eine Kommunikationsverbindung mit einer Steuervorrichtung zur Konfiguration des Werkzeugs mit der externen Steuervorrichtung aufzubauen.

Das Werkzeug kann mit der Steuervorrichtung erkannt werden. Das Werkzeug teilt der Steuervorrichtung die Verbindungsparameter mit, um direkt einen Zugriff auf das Werkzeug erhalten zu können. Damit ist es nicht erforderlich, die Verbindungsparameter an der Steuervorrichtung einzugeben. Dies stellt sicher, dass das Werkzeug auch wirklich aktualisiert wird, wenn es erforderlich ist.

Insgesamt gestattet das zuvor beschriebene Werkzeug einen sehr einfachen und zuverlässigen Aufbau der Kommunikationsverbindung zu der externen Steuervorrichtung. Hierbei können Aktualisierungen der Software oder von Parametern des Werkzeugs schnell, einfach und sicher vorgenommen werden. Dadurch können auch Verzögerungen oder längere Stillstandszeiten beim Arbeiten mit dem Werkzeug minimiert werden.

Vorteilhafte weitere Ausgestaltungen des Werkzeugs sind in den abhängigen Patentansprüchen angegeben.

Es ist denkbar, dass die Übermittlungseinrichtung zur passiven oder aktiven Übermittlung der Verbindungsparameter ausgestaltet ist.

Gemäß einem Ausführungsbeispiel ist die Übermittlungseinrichtung ein Code, welcher an dem Werkzeug für die Steuervorrichtung lesbar angeordnet ist.

Gemäß einem weiteren Ausführungsbeispiel kann die Übermittlungseinrichtung zur Übermittlung mit Nahfeld- und/oder Fernfeldkommunikation ausgestaltet sein. Hierbei ist die Übermittlungseinrichtung möglicherweise zur aktiven oder passiven Nahfeld- und/oder Fernfeldkommunikation ausgestaltet ist.

Die Übermittlungseinrichtung kann ein RFID-Tag sein, welcher die Verbindungsparameter passiv zum Auslesen durch die externe Steuervorrichtung bereitstellt.

Möglich ist, dass die Verbindungsparameter eine IP-Adresse und/oder einen Namen des Werkzeugs umfassen.

Das zuvor beschriebene Werkzeug kann ein Schraubwerkzeug und/oder ein Nietwerkzeug und/oder ein Schweißwerkzeug sein.

Das zuvor beschriebene Werkzeug kann von einer Steuervorrichtung, insbesondere bei einer Automatisierungsanlage, gesteuert werden. Hierbei hat die Steuervorrichtung die Leseeinrichtung zum Lesen von Verbindungsparametern von der Übermittlungseinrichtung des Werkzeugs, um mit den Verbindungsparametern eine Kommunikationsverbindung zwischen der Steuervorrichtung und dem Werkzeug zur Konfiguration des Werkzeugs herzustellen, und eine Aufbaueinrichtung zum Aufbau der Kommunikationsverbindung zwischen der Steuervorrichtung und dem Werkzeug.

Die Aufgabe wird zudem durch ein Verfahren zur Konfiguration eines Werkzeugs mit einer externen Steuervorrichtung nach Patentanspruch 10 gelöst, wobei das Werkzeug ein Werkzeugelement zur Bearbeitung eines Werkstücks aufweist. Das Verfahren hat die Schritte: Übermitteln, mit einer Übermittlungseinrichtung des Werkzeugs, von Verbindungsparametern an eine Leseeinrichtung, Aufbauen der Kommunikationsverbindung mit den übermittelten Verbindungsparametern, und Konfigurieren des Werkzeugs mit der externen Steuervorrichtung.

Das Verfahren erzielt die gleichen Vorteile, wie sie zuvor in Bezug auf das Werkzeug genannt sind.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen. Nachfolgend ist die Erfindung unter Bezugnahme auf die beiliegende Zeichnung und anhand von Ausführungsbeispielen näher beschrieben. Es zeigen:
Fig. 1 ein Blockschaltbild einer Automatisierungsanlage mit einem Werkzeug und einer davon extern angeordneten Steuervorrichtung gemäß einem ersten Ausführungsbeispiel;
Fig. 2 ein Flussdiagramm eines Verfahrens zur Konfiguration eines Werkzeugs mit einer externen Steuervorrichtung gemäß dem ersten Ausführungsbeispiel;
Fig. 3 ein Blockschaltbild einer Automatisierungsanlage mit einem Werkzeug und einer davon extern angeordneten Steuervorrichtung gemäß einem zweiten Ausführungsbeispiel;
Fig. 4 ein Blockschaltbild einer Automatisierungsanlage mit einem Werkzeug und einer davon extern angeordneten Steuervorrichtung gemäß einem dritten Ausführungsbeispiel;
Fig. 5 ein Blockschaltbild einer Automatisierungsanlage mit einem Werkzeug und einer davon extern angeordneten Steuervorrichtung gemäß einem vierten Ausführungsbeispiel; und
Fig. 6 ein Blockschaltbild einer Automatisierungsanlage mit einem Werkzeug und einer davon extern angeordneten Steuervorrichtung gemäß einem fünften Ausführungsbeispiel.

In den Figuren sind gleiche oder funktionsgleiche Elemente, sofern nichts anderes angegeben ist, mit denselben Bezugszeichen versehen.

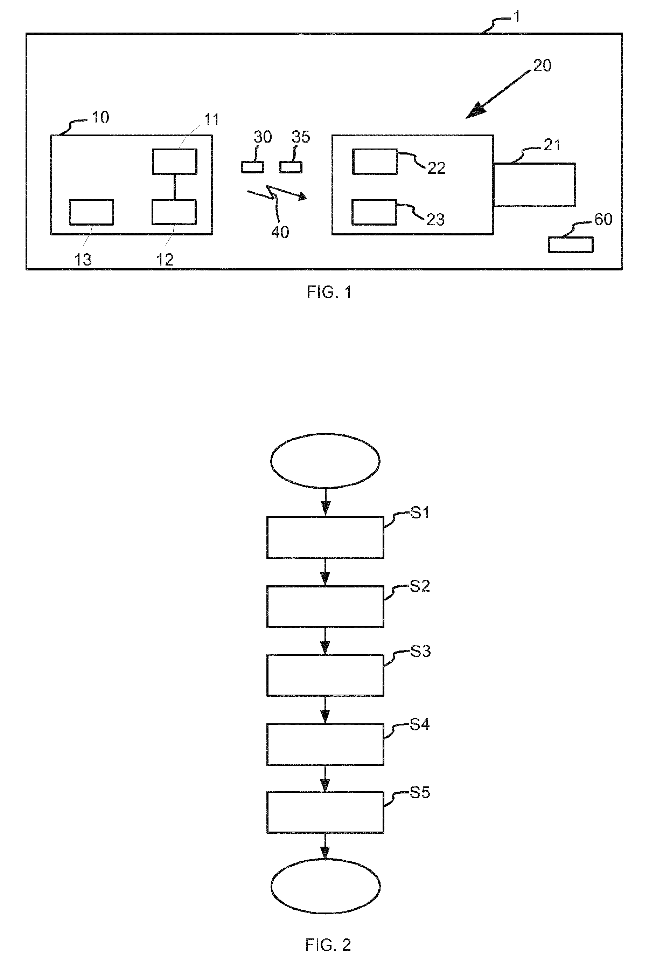

Fig. 1 zeigt schematisch eine Automatisierungsanlage 1 gemäß einem ersten Ausführungsbeispiel. Die Automatisierungsanlage 1 kann beispielsweise eine Fertigungsanlage zur Fertigung von Produkten, wie beispielsweise Fahrzeuge, Möbel, usw. sein. Das Werkzeug 20 kann ein Schraubwerkzeug und/oder ein Nietwerkzeug und/oder ein Schweißwerkzeug sein. Das Werkzeug 20 kann jedoch auch ein spanabhebendes Werkzeug, usw. sein. Das Werkzeug 20 kann jedoch auch beispielsweise ein Roboter, eine Transporteinrichtung oder ähnliches sein, welche ebenfalls bei einem von der Automatisierungsanlage 1 auszuführenden Prozess eingesetzt werden.

Die Automatisierungsanlage 1 hat eine Steuervorrichtung 10 und ein Werkzeug 20, die Verbindungsparameter 30 und Konfigurationsdaten 35 über eine Kommunikationsverbindung 40 austauschen können, wie später noch ausführlicher beschrieben. Die Steuervorrichtung 10 ist extern von dem Werkzeug 20 angeordnet und wird daher auch als externe Steuervorrichtung 10 bezeichnet. Das Werkzeug 20 kann ein Werkstück 60 bearbeiten. Das Werkstück 60 kann ein einzelnes Bauteil sein oder auch bereits mehrere zusammengefügte Bauteile umfassen. Insbesondere kann das Werkstück 60 wieder ein Gerät oder Produkt sein.

In Fig. 1 hat die Steuervorrichtung 10 eine Leseeinrichtung 11, eine Aufbaueinrichtung 12 und eine Konfigurationseinrichtung 13. Das Werkzeug 20 hat ein Werkzeugelement 21, eine Übermittlungseinrichtung 22 und eine Steuereinrichtung 23.

Das Werkzeugelement 21 und damit das Werkzeug 20 in Fig. 1 kann beispielsweise bei einem von der Automatisierungsanlage 1 auszuführenden Prozess zum Einsatz kommen. Die Steuereinrichtung 23 kann hierbei die Ausführung des Prozesses steuern. Ein solcher Prozess kann beispielsweise ein Einschrauben einer Schraube, ein Bohren einer Öffnung, ein Setzen eines Niets, ein Schweißen einer Schweißnaht oder eines Schweißpunktes sein.

Andere Beispiele für das Werkzeug 20 können sein: ein industrielles Werkzeug zur Durchführung von Arbeiten an Werkstücken 60 oder ganz allgemein zur Bearbeitung von Werkstücken 60, insbesondere (Akku-) Schraub- und/oder Bohrwerkzeuge, (Akku-) Stanzwerkzeuge, (Akku-) Nietwerkzeuge, (Akku-) Crimpwerkzeuge oder hydraulische oder pneumatische Komponenten oder Werkzeuge, welche von einem Benutzer zu bedienen und zur Verwendung im Rahmen einer industriellen Automatisierung verwendbar sind.

Bei dem vorliegenden Ausführungsbeispiel ist die Übermittlungseinrichtung 22 ein Code, beispielsweise ein 2- oder dreidimensionaler Barcode oder QR-Code usw. Der Code umfasst die Verbindungsparameter 30 als Informationen. Die Informationen der Verbindungsparameter 30 umfassen die Netzwerkadresse, insbesondere IP-Adresse, und/oder den Namen des Werkzeugs 20. Der Name des Werkzeugs 20 kann eine Zeichenfolge sein, die insbesondere aus Zahl(en) und/oder Buchstabe(n) und/oder Sonderzeichen besteht. Der Code kann mit einer Bediensoftware und/oder Leitrechnersoftware über eine Data-Matrix-Code-Druckfunktion erstellt und am Werkzeug 20 oder der Steuereinrichtung 23 als Übermittlungseinrichtung 22 angebracht sein.

Die Leseeinrichtung 11 der Steuervorrichtung 10 ist derart ausgestaltet, dass sie die im Code lesbar enthaltenen Informationen lesen bzw. zumindest erfassen kann. Somit zeigt die Übermittlungseinrichtung 22 die Informationen des Codes an und übermittelt die Informationen dadurch. Die Leseeinrichtung 11 kann beispielsweise ein optischer Infrarotscanner oder eine Kamera sein.

Hat die Leseeinrichtung 11 die von der Übermittlungseinrichtung 22 übermittelten Informationen des Codes erfasst, leitet sie diese an die Aufbaueinrichtung 12 weiter, welche die Kommunikationsverbindung 40 zwischen der Steuervorrichtung 10 und dem Werkzeug 20 aufbaut. Die Kommunikationsverbindung 40 kann drahtlos oder drahtgebunden sein. Die drahtlose Kommunikation kann beispielsweise per WLAN, Mobilfunk, usw. erfolgen.

Nach Aufbau der Kommunikationsverbindung 30 zwischen der Steuervorrichtung 10 und dem Werkzeug 20 kann die Konfigurationseinrichtung 13 die Konfiguration der Steuereinrichtung 23 des Werkzeugs 20 mit Hilfe der Konfigurationsdaten 35 vornehmen.

Fig. 2 veranschaulicht das in der Automatisierungsanlage 1 von der Steuervorrichtung 10 und dem Werkzeug 20 ausgeführte zugehörige Verfahren zur Konfiguration des Werkzeugs 20 mit der Steuervorrichtung 10.

Bei einem Schritt S1 übermittelt das Werkzeug 20 mit der Übermittlungseinrichtung 22 die Verbindungsparameter 30 an die Steuervorrichtung 10. Dies geschieht bei dem vorliegenden Ausführungsbeispiel durch Anzeige der in der Übermittlungseinrichtung 22 enthaltenen Informationen an dem Werkzeug 10, insbesondere an seinem Gehäuse oder seiner Steuereinrichtung 23. Danach geht der Fluss zu einem Schritt S2 weiter.

Bei dem Schritt S2 werden ein Lesebereich der Leseeinrichtung 11 und die Übermittlungseinrichtung 22 so zueinander angeordnet, dass die Leseeinrichtung 21 die von der Übermittlungseinrichtung 22 übermittelten Verbindungsparameter 30 lesen kann. In Folge dessen liest die Leseeinrichtung 21 die Verbindungsparameter 30 ein und gibt sie an die Aufbaueinrichtung 12 weiter. Danach geht der Fluss zu einem Schritt S3 weiter.

Bei dem Schritt S3 baut die Aufbaueinrichtung 12 die Kommunikationsverbindung 40 mit der Steuereinrichtung 23 des Werkzeugs 20 auf. Anschließend können Daten zwischen der Steuervorrichtung 10 und dem Werkzeug 20 ausgetauscht werden. Danach geht der Fluss zu einem Schritt S4 weiter.

Bei dem Schritt S4 sendet die Konfigurationseinrichtung 13 der Steuervorrichtung 10 Konfigurationsdaten 35 an das Werkzeug 20. Die Konfigurationsdaten 35 können Parameter sein, welche Einstellungen des Werkzeugs 20 bestimmen, beispielsweise sein Drehmoment, den von ihm ausgeführten Drehwinkel, der Ansteuerstrom, usw.. Die Konfigurationsdaten 35 können jedoch auch eine Softwareaktualisierung der Software der Steuereinrichtung 23 des Werkzeugs 20 sein. Danach geht der Fluss zu einem Schritt S5 weiter.

Bei dem Schritt S5 wird die Steuereinrichtung 23 des Werkzeugs mit den Konfigurationsdaten 35 konfiguriert. Insbesondere werden Zugriffs- und/oder Parametrier- und/oder Visualisierungsmodule des Werkzeugs 20 konfiguriert. Danach ist das Verfahren beendet.

Die Kommunikationsverbindung 40 zwischen der Steuereinrichtung 23 und dem Werkzeug 20 kann entweder noch bestehen bleiben oder die Kommunikationsverbindung 40 wird nach Übertragung der Konfigurationsdaten 35 und gegebenenfalls einer positiven Rückmeldung über die erfolgte Konfiguration wieder beendet.

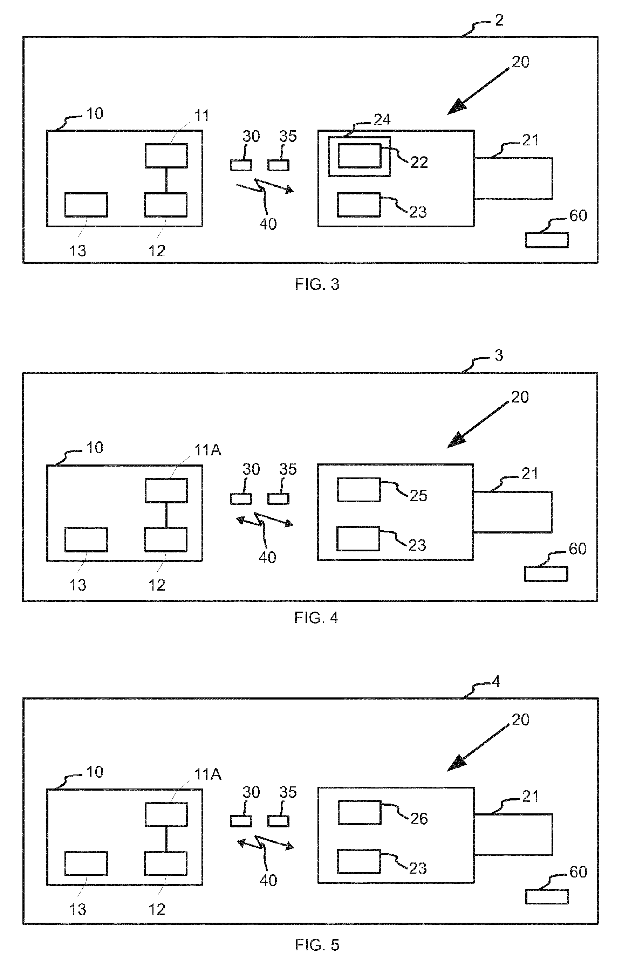

Fig. 3 zeigt eine Automatisierungsanlage 2 mit einem Werkzeug 20 gemäß einem zweiten Ausführungsbeispiel. Das Werkzeug 20 hat eine Anzeigeeinrichtung 24, auf welcher die Übermittlungseinrichtung 23 bei Bedarf angezeigt wird. Somit muss die Übermittlungseinrichtung 23 nicht fest an dem Werkzeug 20 angebracht werden. Dadurch kann die Übermittlungseinrichtung 23 bzw. der Code leichter geändert werden. Zudem kann eine Alterung und/oder Beschädigung und/oder Verschmutzung und damit Verschlechterung der Lesbarkeit der Übermittlungseinrichtung 23 einfach vermieden werden.

Fig. 4 zeigt eine Automatisierungsanlage 3 mit einem Werkzeug 20 gemäß einem dritten Ausführungsbeispiel. Das Werkzeug 20 hat eine Übermittlungseinrichtung 25, welche in Nahfeldkommunikation passiv, also auf Anfrage der Steuervorrichtung 10, die Verbindungsparameter 30 an die Steuervorrichtung 10 übermittelt. Unter Nahfeldkommunikation wird ein funkbasierter und kontaktloser Datenaustausch über kürzere Strecken im Zentimeterbereich verstanden, beispielsweise bis zu 12 Zentimeter. Die Trägerfrequenz des Funksignals liegt hierbei üblicherweise im GHz-Bereich.

Die Datenübertragung über die Kommunikationsverbindung 40 erfolgt unter Verwendung einer aktiven Leseeinheit, der Leseeinrichtung 11A, und eines aktiven Transponders umfassend einen Datenspeicher und eine Antenne. Der Transponder wird durch die Übermittlungseinrichtung 25 gebildet. Die Ankopplung der Leseeinrichtung 11A an die Antenne erfolgt mittels Magnetfelder, welche die Leseeinrichtung 11A erzeugt. Mittels der Magnetfelder werden die Verbindungsparameter 30 als Daten übertragen und der oder die Transponder mit Energie versorgt. Mit Hilfe der Magnetfeldstärke ist die Reichweite beeinflussbar. Die Transponder können NFC-Chips (NFC = Near Field Communication = Nahfeldkommunikation) und/oder RFID-Tags (RFID = radio-frequency identification = Identifizierung mit Hilfe elektromagnetischer Wellen) sein.

Hierfür kann die Übermittlungseinrichtung 25 des Werkzeugs 20 bei dem Schritt S2 des in Bezug auf das erste Ausführungsbeispiel beschriebenen Verfahrens insbesondere in die Leseeinrichtung 11A gesteckt oder an die Leseeinrichtung 11A gehalten oder auf die Leseeinrichtung 11A aufgelegt werden, so dass die Übermittlungseinrichtung 25 in dem Lesebereich der Leseeinrichtung 11A angeordnet ist. Befindet sich die Übermittlungseinrichtung 25 in dem Lesebereich der Leseeinrichtung 11A, baut die Aufbaueinrichtung 12 die Kommunikationsverbindung 40 aufgrund der übermittelten Verbindungsparameter 35 auf, wie bei dem Schritt S3 des in Bezug auf das erste Ausführungsbeispiel beschriebenen Verfahrens. Anschließend können die Konfigurationsdaten 35 von der Steuervorrichtung 10 an das Werkzeug 20 gesendet werden, usw., wie bei Schritt S4 und S5 in Bezug auf das erste Ausführungsbeispiel beschrieben.

Somit sind bei der Nahfeldkommunikation die Übermittlungseinrichtung 25 und die Leseeinrichtung 21 bei einer Kommunikation mit Hilfe von Funktechnik nur über kurze Strecken voneinander entfernt angeordnet. Die Kommunikation kann hierbei den ISO-Standards ISO 7816 bzw. ISO 14443A entsprechen.

Um die Kommunikation über die Kommunikationsverbindung 30 zu beenden kann das Werkzeug 20, genauer gesagt die Übermittlungseinrichtung 23 aus dem Lesebereich der Leseeinrichtung 21 entfernt werden.

Das Verfahren ist beendet, wenn das Werkzeug 20 und/oder die Automatisierungsanlage 1 ausgeschaltet ist.

Ansonsten ist die Automatisierungsanlage 3 gemäß dem vorliegenden Ausführungsbeispiel auf die gleiche Weise aufgebaut, wie zuvor in Bezug auf das erste und/oder zweite Ausführungsbeispiel beschrieben.

Fig. 5 zeigt eine Automatisierungsanlage 4 mit einem Werkzeug 20 gemäß einem vierten Ausführungsbeispiel. Im Unterschied zum dritten Ausführungsbeispiel hat die Automatisierungsanlage 4 eine Übermittlungseinrichtung 26, welche ein aktiver Transponder mit eigener Stromversorgung ist. Somit kann die Übermittlungseinrichtung 25 bei dem Schritt S2 des in Bezug auf das erste Ausführungsbeispiel beschriebenen Verfahrens aktiv selber die Verbindungsparameter 30 an die Steuervorrichtung 10 übermitteln.

Ansonsten ist die Automatisierungsanlage 4 gemäß dem vorliegenden Ausführungsbeispiel auf die gleiche Weise aufgebaut wie zuvor in Bezug auf das dritte Ausführungsbeispiel beschrieben.

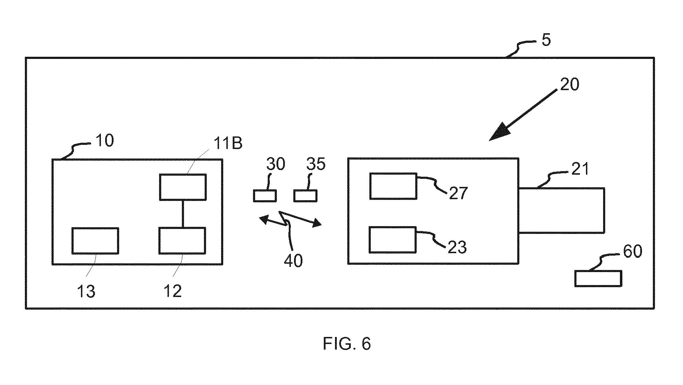

Fig. 6 zeigt eine Automatisierungsanlage 5 gemäß einem fünften Ausführungsbeispiel. Gemäß dem fünften Ausführungsbeispiel kommuniziert eine Leseeinrichtung 11B der Steuervorrichtung 10 mit einer Übermittlungseinrichtung 27 in Fernfeldkommunikation.

Unter Fernfeldkommunikation wird ein funkbasierter und kontaktloser Datenaustausch mit gegenüber dem Nahfeldbereich größerer Wellenlänge verstanden, beispielsweise können hier Entfernungen ab 35 Zentimeter bis zu mehreren Metern überbrückt werden. Die Trägerfrequenz des Funksignals liegt üblicherweise im MHz-Bereich. Die Datenübertragung erfolgt unter Verwendung einer aktiven Leseeinheit, der Leseeinrichtung 11B, und eines passiven Transponders umfassend einen Datenspeicher und eine Antenne. Der Transponder wird bei dem vorliegenden Ausführungsbeispiel durch die Übermittlungseinrichtung 27 gebildet sein. Die Ankopplung der Leseeinrichtung 11B erfolgt mittels Magnetfelder, welche die Leseeinrichtung 11B erzeugt. Mit Hilfe der Magnetfelder werden Daten übertragen und der oder die Transponder mit Energie versorgt. Mittels der Magnetfeldstärke ist die Reichweite beeinflussbar. Die Transponder können auch bei dem vorliegenden Ausführungsbeispiel NFC-Chips (NFC = Near Field Communication = Nahfeldkommunikation) und/oder RFID-Tags sein.

Gemäß einer Modifikation des vorliegenden Ausführungsbeispiels kann auch ein aktiver Transponder mit eigener Stromversorgung als Übermittlungseinrichtung 27 eingesetzt werden.

Demzufolge genügt es, wenn das Werkzeug 20, genauer gesagt seine Übermittlungseinrichtung 27 im unmittelbaren Umfeld der Leseeinrichtung 11B anwesend ist. Der Bereich des unmittelbaren Umfelds um das Werkzeug 20 umfasst den für die Nahfeldkommunikation erforderlichen Bereich und geht bis zu einem Bereich, welcher die voraussichtliche Entfernung des Werkzeug 20 von der Steuervorrichtung 10 bei der Konfiguration des Werkzeugs 20 ist. Der Bereich kann daher in einem Bereich bis zu weniger Metern, jedoch auch beispielsweise bis zu ca. 10 m oder 20 m liegen.

Hierbei ist die Leseeinrichtung 11B eine Sender-/Empfängereinheit, beispielsweise ein RFID-Schreib-/Lesegerät (RFID = radio-frequency identification = Identifizierung mit Hilfe elektromagnetischer Wellen) mit UHF-Fernfeld-Antenne (UHF = Ultra High Frequency = Frequenz von Mikrowellen bzw. Dezimeterwellen). In der Übermittlungseinrichtung 27 ist ein Schlüssel (Key) gespeichert, der von der Leseeinrichtung 11B als Sender-/Empfängereinheit detektiert werden kann. Hier weist auch die Übermittlungseinrichtung 27 eine Sender-/Empfängereinheit auf. Das System aus Leseeinrichtung 11B und Übermittlungseinrichtung 27 sollte so ausgelegt sein, dass die Übermittlungseinrichtung 27 innerhalb des üblichen Abstands von Werkzeug 20 und Steuervorrichtung 10 bei der Konfiguration des Werkzeugs 20 erkannt wird.

Die oben beschriebenen Ideen eignen sich prinzipiell für alle Werkzeuge 20, mittels derer Arbeiten von einem Bediener durchzuführen sind und welche an eine Steuerung angebunden sind, beispielsweise im Automobilbau oder im Flugzeugbau mittels Schraubwerkzeugen, Schweißwerkzeugen, Nietwerkzeugen, Stanzwerkzeugen, Bohrwerkzeugen und dergleichen.

Alle zuvor beschriebenen Ausgestaltungen der Automatisierungsanlagen 1 bis 5, des Werkzeugs 20, der Übermittlungseinrichtungen 23, 25, 26, 27 der Leseeinrichtungen 11, 11A, 11B und des Verfahrens können einzeln oder in allen möglichen Kombinationen Verwendung finden. Insbesondere können alle Merkmale und/oder Funktionen der zuvor beschriebenen Ausführungsbeispiele beliebig kombiniert werden. Zusätzlich sind insbesondere folgende Modifikationen denkbar.

Die in den Figuren dargestellten Teile sind schematisch dargestellt und können in der genauen Ausgestaltung von den in den Figuren gezeigten Formen abweichen, solange deren zuvor beschriebenen Funktionen gewährleistet sind.

Beispielsweise kann das Werkzeug 20 Mittel zur Realisierung einer Nahfeldkommunikation und/oder einer Fernfeldkommunikation umfassen, welche während einer Grundparametrierung auswählbar und deren Funkradius mittels einstellbarer Funkmodulparameter einstellbar ist.

In Bezug auf die Wahl von Nahfeldkommunikation und/oder Fernfeldkommunikation kann das Werkzeug 20 selbst auch Parameter umfassen, mit Hilfe derer die individuelle Situation für die Kommunikation vor Ort, beispielsweise durch einen entsprechend geschulten Benutzer, konfigurierbar ist.

Auch wäre es denkbar, dass Funkmodule zur Herstellung der Kommunikationsverbindung 40 der Steuervorrichtung 10 und des Werkzeugs 20 mehrere Funkkanäle bereitstellen, welche für einen Benutzer auswählbar sind, so dass beispielsweise mehrere in unmittelbarer Nähe zueinander angeordnete Werkzeuge 20 sich nicht gegenseitig stören oder beeinflussen.

Es wäre auch denkbar, dass die Leseeinheit in Form der Leseeinrichtung 11A und/oder der Leseeinrichtung 11B in der Lage ist, einen vom Transponder, also der Übermittlungseinrichtung 25, 26, 27, umfassten Speicher zu beschreiben. So könnten beispielsweise während einer vorangehenden Konfiguration spezifische Informationen auf dem Transponder abgelegt werden. Die spezifischen Informationen können beispielsweise die Version der Konfiguration sein. Die Daten auf dem Transponder der Übermittlungseinrichtung 25, 26, 27 könnten so beispielsweise beim nächsten Kontakt mit dem Werkzeug 20 ausgelesen und bei Folgekonfigurationen mit berücksichtigt werden oder diese Daten könnten zentral erfasst und ausgewertet werden. Es wäre dann ersichtlich, welche Konfiguration bei welchem Werkzeug 20 und zu welcher Zeit erfolgt ist. Auch damit kann sichergestellt werden, dass das Werkzeug 20 immer auf dem aktuellen Stand ist oder gebracht wird.

Die Automatisierungsanlage 1 kann auch mehr als eine Steuervorrichtung 10 und/oder mehr als ein Werkzeug 20 umfassen.

Die Leseeinrichtungen 11, 11A, 11B können auch extern von der Steuervorrichtung 10 vorgesehen sein. Übermittlungseinrichtung 25, 26, 27 kann auch Teil der Steuereinrichtung 23 sein.

## Patentansprüche

1. Werkzeug (20), mit einem Werkzeugelement (21) zur Bearbeitung eines Werkstücks (60), und einer Übermittlungseinrichtung (22; 25; 26; 27) zur Übermittlung von Verbindungsparametern (30) an eine Leseeinrichtung (11; 11A; 11B), um eine Kommunikationsverbindung (40) mit einer Steuervorrichtung (10) zur Konfiguration des Werkzeugs (20) mit der externen Steuervorrichtung (10) aufzubauen.

2. Werkzeug (20) nach Anspruch 1, wobei die Übermittlungseinrichtung (22; 25; 26; 27) zur passiven oder aktiven Übermittlung der Verbindungsparameter (30) ausgestaltet ist.

3. Werkzeug (20) nach Anspruch 1 oder 2, wobei die Übermittlungseinrichtung (22) ein Code ist, welcher an dem Werkzeug (20) für die Steuervorrichtung (10) lesbar angeordnet ist.

4. Werkzeug (20) nach Anspruch 1 oder 2, wobei die Übermittlungseinrichtung (25; 26) zur Übermittlung mit Nahfeld- und/oder Fernfeldkommunikation ausgestaltet ist.

5. Werkzeug (20) nach Anspruch 4, wobei die Übermittlungseinrichtung (25; 26) zur aktiven oder passiven Nahfeld- und/oder Fernfeldkommunikation ausgestaltet ist.

6. Werkzeug (20) nach Anspruch 4 oder 5, wobei die Übermittlungseinrichtung (25) ein RFID-Tag ist, welcher die Verbindungsparameter (30) passiv zum Auslesen durch die externe Steuervorrichtung (10) bereitstellt.

7. Werkzeug (20) nach einem der vorangehenden Ansprüche, wobei die Verbindungsparameter (30) eine IP-Adresse und/oder einen Namen des Werkzeugs (20) umfassen.

8. Werkzeug (20) nach einem der vorangehenden Ansprüche, wobei das Werkzeug (20) ein Schraubwerkzeug und/oder ein Nietwerkzeug und/oder ein Schweißwerkzeug ist.

9. Steuervorrichtung (10) zur Steuerung eines Werkzeugs (20) nach einem der vorangehenden Ansprüche, insbesondere bei einer Automatisierungsanlage, mit der Leseeinrichtung (11) zum Lesen von Verbindungsparametern (30) von der Übermittlungseinrichtung (22; 25; 26) des Werkzeugs (20), um mit den Verbindungsparametern (30) eine Kommunikationsverbindung (40) zwischen der Steuervorrichtung (10) und dem Werkzeug (20) zur Konfiguration des Werkzeugs (20) herzustellen, und einer Aufbaueinrichtung (12) zum Aufbau der Kommunikationsverbindung (40) zwischen der Steuervorrichtung (10) und dem Werkzeug (20).

10. Verfahren zur Konfiguration eines Werkzeugs (20) mit einer externen Steuervorrichtung (10), wobei das Werkzeug (20) ein Werkzeugelement (21) zur Bearbeitung eines Werkstücks (60) aufweist, mit den Schritten Übermitteln (S1), mit einer Übermittlungseinrichtung (22; 25; 26) des Werkzeugs (10), von Verbindungsparametern (30) an eine Leseeinrichtung (11; 11A; 11B), Aufbauen (S3) der Kommunikationsverbindung (40) mit den übermittelten Verbindungsparametern (30), und Konfigurieren (S5) des Werkzeugs (20) mit der externen Steuervorrichtung (10).
